# EUROPEAN PATENT SPECIFICATION

(11) **EP 2 482 753 B1**
(45) Date of publication and mention of the grant of the patent: **05.08.2015**
(21) Application number: 10757612.6
(22) Date of filing: 28.09.2010
(51) Int. Cl.: A61C 8/00

(54) **DENTAL IMPLANT HAVING IMPROVED OSSEOINTEGRATION CHARACTERISTICS**
ZAHNIMPLANTAT MIT VERBESSERTEN EINHEILUNGSEIGENSCHAFTEN
IMPLANT DENTAIRE PRÉSENTANT DES CARACTÉRISTIQUES D'OSTÉOINTÉGRATION AMÉLIORÉES

(30) Priority: 01.10.2009 IT MI20091686
(43) Date of publication of application: 08.08.2012
(73) Proprietor: Ornaghi Luigi & C. S.N.C. Di Ornaghi Giuseppe Ed Angelo, 20047 Brugherio MB (IT)
(72) Inventor: Ornaghi, Giuseppe, I-20047 Brugherio MB (IT)
(74) Representative: Spina, Alessandro
(86) International application number: PCT/EP2010/064329
(87) International publication number: WO 2011/039162

(56) References cited:
- EP-A1- 2 233 108
- WO-A1-2004/058091
- WO-A1-2006/117298
- WO-A2-2007/074498
- US-A- 5 639 237
- US-A- 6 095 817
- US-A1- 2005 084 820
- US-A1- 2006 204 930

## Description

The present invention relates to a dental implant and in particular to a dental implant having improved osseointegration characteristics.

Dental implants are artificial dental roots placed into the mandibula or in the maxilla of a patient in order to support one or more dental prostheses. The implants are generally made of titanium and are comprised of self-tapping members that are surgically inserted into the maxilla and/or the mandibula of the patient by making bores of a suitable size. After the insertion of the self-tapping members there starts an osseointegration process, i.e. a process wherein a close connection between living bone and the self-tapping member is progressively established. The effectiveness of the osseointegration process depends on the shape and the surface type of the implant. Once the osseointegration process is finished, an "abutment" is mounted on the implant by direct screwing or through a secondary screw. The abutment thus protrudes from the gum and forms the base for fixing a dental prosthesis or, alternatively a bridge.

A dental implant must be able to ensure an adequate "primary" stability, i.e. withstand loads deriving from e.g. chewing without moving with respect to the bone during the period immediately following its insertion, and a good "secondary" stability, i.e. it must be stable over time without modifying its position with respect to the bone after completion of the osseointegration process.

In the aim of providing a dental implant with a good primary stability, numerous types of threads have been studied and developed as an alternative to the known triangular o trapezoidal threads that are typical of a self-tapping member. The international publication WO 93/06786 discloses, for example, a dental implant wherein the self-tapping member has a frustum-conical shape and wherein the thread has a guide flank substantially perpendicular to the axis of the self-tapping member. This allows to have a large contact surface between the dental implant and the bone of the mandibula or of the maxilla during the insertion step, thus being able to achieve a high primary stability, as well as to reduce the stresses withstood by the bone during chewing.

The international publication WO 2007/074498 discloses a dental implant wherein the self-tapping member has a larger bone-implant interface with respect to the bone-implant interfaces of traditional implants. The thread profile comprises a plurality of recesses and/or protrusions variously arranged along its flanks. This solution allows to improve the characteristics of the implant in terms of primary stability and to optimize the surface available for the osseointegration process.

The secondary stability is instead mainly influenced by the size of the surface area and by the surface finishing of the implant. It is known in fact that a smooth surface does not promote the growth of osteoblastic cells, whereby special roughening treatments are generally used in the manufacturing of dental implants, such as e.g. blasting with sand or metal oxides combined with etching with acid compounds. It is known that if the implant is provided with a rough surface, the osseointegration process is remarkably faster and more effective.

Patent EP 552261 discloses, for example, a method allowing to obtain a surface finishing on dental implants that is suitable to promote the growth of osteoblastic cells. The surface of an implant made of titanium or an alloy thereof is blasted with titanium oxide particles, thus obtaining a predefined roughness and allowing at the same time to clean the surfaces of the implant by removing polluting agents present thereon e.g. as a consequence of mechanical operations needed for the manufacture of the implant.

The international publication WO 2004/058091 discloses a dental implant provided with a thread suitable to engage the bone of the maxilla or of the mandibula of a patient. The flanks of the thread are provided with one or more grooves that contribute to the osseointegration process and improve the stability of the implant over time. The grooves may be arranged at the same distance from the axis of the implant or at different distances and may be formed in the radical or cortical flank or on both flanks of the thread.

Patent application US 2006/0204930 discloses a dental implant having a helical threaded profile wherein the radical and cortical flanks of each coil are provided with micro-patterns having different shapes and cross-sections and allowing to increase the surface area at the bone-implant interface.

Patent US 5639237 discloses a dental implant having a threaded portion that is at least partially provided with a coating of hydroxyl apatite and with a plurality of indentations suitable to increase the surface area at the bone-implant interface in order to promote the growth of the bone around the implant.

The international publication WO 2006/117298 discloses a dental implant whose threaded profile is provided with micro- and nano-patterns suitable to increase the surface-area at the bone-implant interface. At the core diameter of the implant concave-shaped portions are formed in the thread profile. These portions are suitable, to receive bone cells during the growth phase.

Patent application US 2005/0084820 discloses a dental implant whose thread profile comprises notches and longitudinal slots. The implant also comprises an inner cavity open at the radical end and communicating with the threaded surface through the longitudinal slots. The notches, the longitudinal slots and the cavity of the implant allow to hold bone chips left after boring the maxilla or the mandibula or created during self-tapping, thus promoting the growth of new bone tissue.

Notwithstanding the numerous types of dental implants known in the field, a good primary and secondary stability of the self-tapping members are still two of the main problems of known implants.

The primary stability in fact is always the result of a compromise between the need for limiting the screwing torque when inserting the self-tapping member, in order not to excessively stress the bone, and the need for an adequate grip surface on the bone. Moreover, there are more and more cases wherein the abutment and the prosthesis are fixed to the implant without waiting for the completion of the osseointegration process, whereby the implant is strongly stressed well before its ultimate stabilization.

The secondary stability is instead strictly related to the way in which the bone grows around the implant, which, as explained above, is strongly influenced by both the three-dimensional shape of the self-tapping member and the type of surface finishing.

Still another problem of known dental implants is related to the long time the bone needs to grow around a dental implant, i.e. the healing time, which at present can be estimated comprised between 6 and 8 months. The healing time is also influenced by the total surface area and by the geometry of the self-tapping member, as well as by the degree of cleaning of the surfaces, and thus represents a very important parameter in the choice of the implant.

Notwithstanding the numerous technical solutions known in the field, there is still the need for further improving the characteristics of dental implants in terms of primary and secondary stability and as well as the need for reducing the healing time as much as possible to the advantage of patients.

It is therefore an object of the present invention to provide a dental implant having improved osseointegration characteristics and allowing to overcome the above-mentioned disadvantages. Said object is achieved with a dental implant, whose main features are disclosed in the first claim, while other features are disclosed in the remaining claims.

The dental implant of the invention is comprised of a self-tapping member which comprises a plurality of recesses in the form of concave portions formed in the radical and cortical flanks of its threaded profile. These recesses are so arranged that the concave portions formed in the radical flank of each coil of the threaded profile are farther from the axis of the self-tapping member than the concave portions formed in the cortical flank of the same coil. In this way, each coil of the threaded profile has a shape that is slightly inclined towards the radical portion of the implant, which allows to improve the characteristics of primary stability of the implant and its strength with respect to compression loads.

An advantage provided by the invention is that, thanks to the configuration of the concave portions as spherical caps, it is possible to improve the characteristics of the implant also in terms of secondary stability during the osseointegration process.

Another advantage provided by the invention is that the surfaces of the implant are provided with a degree of roughness that has been particularly studied in order to promote the growth of osteoblastic cells. By employing the implant according to the invention, the osteoblastic cells initially assume a globose shape and then a cuboidal shape, which has proved to favor and speed up the osseointegration process.

Further advantages and features of the dental implant according to the present invention will become clear to those skilled in the art from the following detailed and non-limiting description of an embodiment thereof with reference to the attached drawings, wherein:
- figure 1 is a front view of a dental implant according to the invention;
- figure 2 is a top view of the dental implant of figure 1;
- figure 3 is a cross-sectional view taken along line III-III of figure 1;
- figure 4 is a longitudinal sectional view taken along line IV-IV of figure 2; and
- figure 5 shows a detail V of the longitudinal section of figure 4.

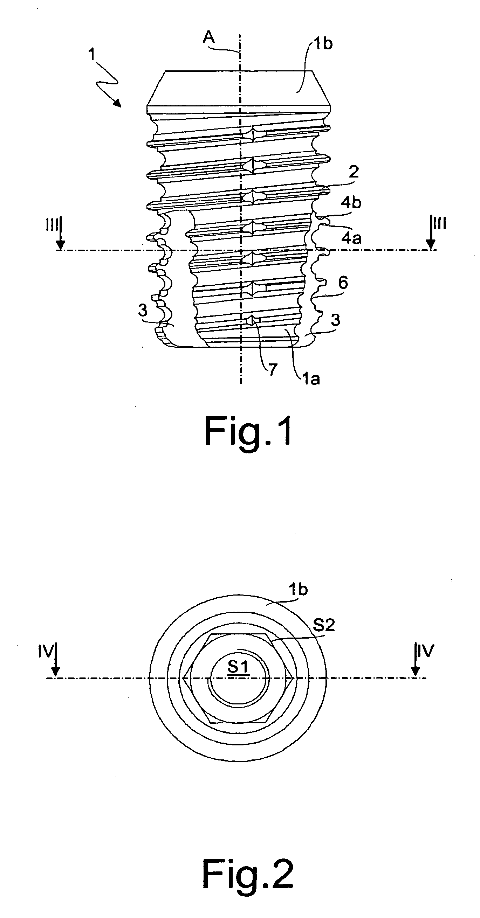

Referring to figures 1, 2 and 3, the dental implant according to the invention consists of a self-tapping member 1 suitable to be inserted into the mandibula or the maxilla of a patient. The self-tapping member 1 comprises a cylinder-shaped body having a longitudinal axis A that defines a longitudinal direction. The self-tapping member 1 has a radical portion 1a at one end of the cylinder-shaped body, which radical portion 1a is intended to be inserted proximate to the bottom of a bore formed in the mandibula or in the maxilla of the patient. The self-tapping member 1 also has a cortical portion 1b arranged at the opposite end of the cylinder-shaped body in the longitudinal direction, which cortical portion 1b is suitable to face the gum of the patient once the self-tapping member 1 is inserted in the bore formed in the mandibula or in the maxilla of the patient.

Referring to figure 2 in particular, the self-tapping member 1 comprises a seat S1, a threaded seat in particular, which extends along the longitudinal direction from the cortical portion 1b towards the radical portion 1a and is suitable to receive and fix an abutment (not shown) intended to support a dental prosthesis (not shown). The self-tapping member 1 further comprises a second seat S2, coaxial to the first seat S1 and having a non-circular cross-section suitable to allow to maneuver the self-tapping member 1 during its mounting into the mandibula or the maxilla. In the embodiment shown in the drawings, the second seat S2 has an hexagonal cross-section.

The self-tapping member 1 is provided with a threaded profile 2 comprising a radical flank 2a facing the radical portion 1a and a cortical flank 2b facing the cortical portion 1b.

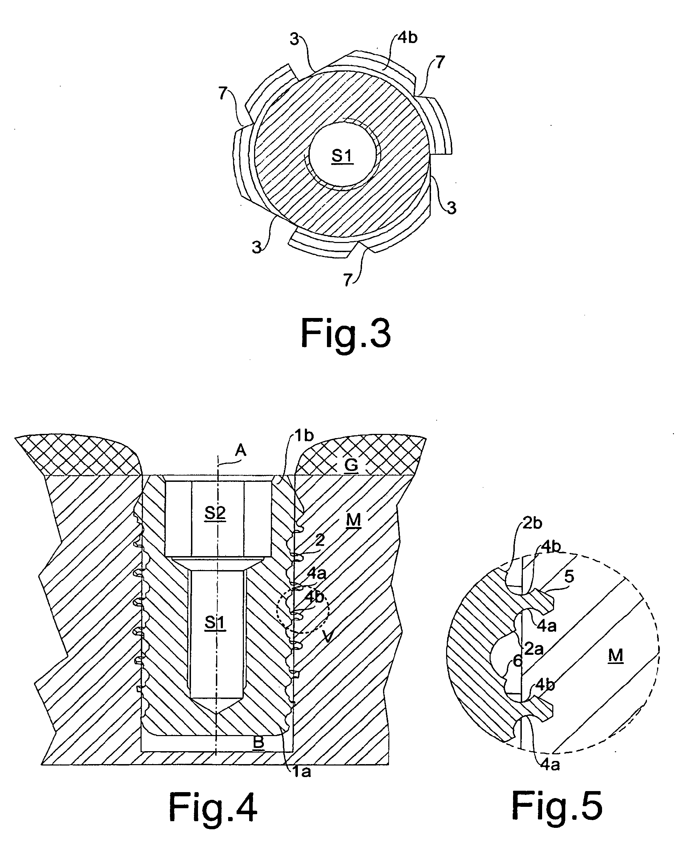

The self-tapping member 1 further comprises one or more cavities 3 extending along a longitudinal direction starting from the radical portion 1a towards the cortical portion 1b and suitable to help to retain the self-tapping member 1 in the bone once the osseointegration process is complete. As shown in figure 3 in particular, in a cross-sectional view the longitudinal cavities 3 are formed starting from the core of the self-tapping member 1 and widen in a tangential direction.

Figure 4 shows a longitudinal section of the self-tapping member 1 of figure 1 inserted in a bore B formed e.g. in the mandibula M of a patient. As it may be seen, the self-tapping member 1 is completely inserted in the bone, thus leaving room for the mounting of an abutment (not shown), which will protrude from the gum G.

The threaded profile 2 of the self-tapping member 1 comprises a plurality of recesses having the shape of concave portions 4a, 4b respectively formed in its radical and cortical flanks 2a, 2b. According to the present invention and referring to figure 5, it may be seen that the recesses are arranged at different distances from the longitudinal axis A of the self-tapping member 1. The concave portions 4a formed in the radical flank 2a of a coil have a distance from axis A greater than the distance of the concave portions 4b formed in the cortical flank 2b of the same coil. This allows to provide the threaded profile 2 with a slight inclination towards the radical portion 1a of the self-tapping member 1, which has proved to be suitable to allow the self-tapping member 1 to withstand the vertical loads, e.g. those generated by chewing, more effectively than known dental implants, because it allows to have a better distribution of the compression stresses and prevents the dental implant from moving and/or being tilted relative to the bore B. This configuration thus allows to improve the characteristics of the implant in terms of primary stability.

In the embodiment shown in the drawings, each coil of the threaded profile 2 comprises a single concave portion 4a formed in the radical flank 2a and a single concave portion 4b formed in the cortical flank 2b. However, it is possible to make self-tapping members 1 having two or more concave portions 4a, 4b respectively formed in the radical and cortical flanks 2a, 2b of each coil of the threaded profile 2.

The concave portions 4a, 4b formed in the threaded profile 2 of the self-tapping member 1 are in the form of spherical caps and have radiuses comprised between 0.1 and 1 mm, thus allowing to define a plurality of embodiments and therefore to be able to choose the most suitable self-tapping member 1 on the basis of the health condition of the patient and of the position of the tooth or teeth to be replaced.

Still in the aim to define a plurality of embodiments, the pitch of the threaded profile may vary between 0.5 and 3 mm and the minimum thickness of the threaded profile 2 at the concave portions 4a, 4b may vary between 0.1 and 1 mm.

The configuration of the concave portions 4a, 4b as spherical caps is such that the bone portion comprised between adjacent coils of the threaded profile 2 is blocked in a sort of "vice", which allows to effectively counteract the relative movements between the self-tapping member 1 and the bore B immediately after the insertion step and during the osseointegration process.

The self-tapping member 1 further comprises a plurality of concave portions 6, that are preferably also in the form of spherical caps, formed at its core diameter. The presence of the concave portions 6 together with the concave portions 4a, 4b formed in the flanks of the threaded profile 2 allows to increase the number of the gripping zones of the self-tapping member 1 on the bone, particularly in view of the osseointegration process.

The threaded profile 2 of the self-tapping member 1 is further provided with a plurality of notches 7 formed, e.g. by milling, in the longitudinal direction. The notches 7, shown in figures 1 and 3, allow to let blood clots out during the insertion of the self-tapping member 1 into the bore B and also have an unscrewing function that is particularly suitable during the healing phase, when the osseointegration process has started but the new bone tissues have not yet filled the bore B completely.

According to another aspect of the invention, the surfaces of the self-tapping member 1 may advantageously be roughened with known blasting treatments and subsequent etching with one or more acid solutions. It is known in fact that the osseointegration process is remarkably faster and more effective if a dental implant is provided with a sponge-like surface. Moreover, the treatments of blasting and etching with acid solutions allow to clean the surfaces of the implant after its manufacturing, thus removing most of the polluting agents that might slow the osseointegration process and/or cause undesired inflammation of the bone and/or of the gum. According to the invention, the blasting and etching treatments may advantageously be followed by a further plasma cleaning treatment, thus allowing to minimize the presence of polluting agents and favor the osseointegration process.

The inventors have carried out numerous tests of blasting and etching with acid solutions and have therefore determined an optimum level of surface roughness that allows to remarkably accelerate the osseointegration process. The main parameters of roughness, measured according to the standard ISO 4287, are set forth in the following table 1 together with their tolerances.

**Table 1**

| **Parameter** | **Value [µm]** |
|---|---|
| Ra (Average roughness of the profile) | 3.18 ± 0.72 |
| Rq (Root mean square) | 4.131 ± 0.92 |
| Rz (Maximum height) | 21.79 ± 5.67 |
| Rp (Maximum peak) | 8.47 ± 2.67 |
| Rv (Maximum depth) | 13.33 ± 2.97 |
| Rc (Average height) | 14.07 ± 3.01 |
| RSm (Average distance between the irregularities) | 77.47 ± 18.01 |

Numerous experimental tests carried out on laboratory samples have shown that the dental implants according to the invention having surfaces with a roughness level as set forth in Table 1 allow the growth of osteoblastic cells and the completion of the osseointegration process over times of about 3-4 months, i.e. substantially halving the healing times that can be achieved by using known dental implants.

In order to allow the osseointegration process to take place correctly, the osteoblastic cells must develop in an initially globose shape and then in a cuboidal shape. Experimental tests have shown that the growth mode of osteoblastic cells is deeply influenced by the size of the average distance between the irregularities (RSm) and contrary to what is known in the field, the growth is surprisingly promoted by using a RSm comprised between about 60 and about 95 µm, i.e. much larger than the RSm of the surfaces of known dental implants.

## Claims

1. A dental implant consisting of a self-tapping member (1) comprising a threaded profile (2) provided with a radical flank (2a) and a cortical flank (2b), a plurality of recesses in the form of concave portions (4a, 4b) being formed in each one of flanks, wherein the concave portions (4a) formed in the radical flank (2a) of a coil of the threaded profile (2) are located at a distance from a longitudinal axis (A) of the self-tapping member (1) which is greater than the distance of the concave portions (4b) formed in the cortical flank (2b) of the same coil, **characterized in that** the threaded profile (2) has an inclination towards a radical portion (1a) of the self-tapping member (1).

2. A dental implant according to the previous claim, **characterized in that** the threaded profile (2) further comprises a plurality of concave portions (6) formed at the core diameter of the self-tapping member (1).

3. A dental implant according to the previous claim, **characterized in that** the concave portions (4a, 4b; 6) are spherical caps.

4. A dental implant according to any of the previous claims, **characterized in that** the threaded profile (2) of the self-tapping member (1) comprises a plurality of notches (7) formed in the longitudinal direction.

5. A dental implant according to any of the previous claims, **characterized in that** the self-tapping member (1) is provided with longitudinal cavities (3) formed in the radical portion (1a).

6. A dental implant according to one of the previous claims, **characterized in that** the surfaces of the self-tapping member (1) are rough and the value of the average distance between the irregularities (RSm) is comprised between 60 and 95 µm.

## Patentansprüche

1. Ein Zahnimplantat, bestehend aus einem selbstschneidenden Element (1), umfassend ein Gewindeprofil (2) mit einer wurzelseitigen Flanke (2a) und mit einer kortikalen Flanke (2b), sowie mit einer Mehrzahl von in jeder der Flanken eingeformten Ausnehmungen in Form von konkaven Bereichen (4a, 4b), wobei die in die wurzelseitige Flanke (2a) einer Windung des Gewindeprofils (2) eingeformten konkaven Bereiche (4a) in einem Abstand von der Längsachse (A) des selbstschneidenden Elements (1) gelegen sind, der größer ist als der Abstand der in die kortikale Flanke (2b) der selben Windung eingeformten konkaven Bereiche (4b), **dadurch gekennzeichnet, dass** das Gewindeprofil (2) eine Neigung aufweist hin zu dem wurzelseitigen Bereich (1a) des selbstschneidenden Elements (1).

2. Ein Zahnimplantat nach dem vorangehenden Anspruch, **dadurch gekennzeichnet, dass** das Gewindeprofil (2) ferner eine Mehrzahl von konkaven Bereichen (6) aufweist, welche an dem Kerndurchmesser des selbstschneidenden Elements (1) ausgebildet sind.

3. Ein Zahnimplantat nach dem vorangehenden Anspruch, **dadurch gekennzeichnet, dass** die konkaven Bereiche (4a, 4b; 6) kugelförmige Kappen sind.

4. Ein Zahnimplantat nach einem der vorangehenden Ansprüche, **dadurch gekennzeichnet, dass** das Gewindeprofil (2) des selbstschneidenden Elements (1) eine Mehrzahl von Kerben (7) aufweist, welche in der Längsrichtung verlaufen.

5. Ein Zahnimplantat nach einem der vorangehenden Ansprüche, **dadurch gekennzeichnet, dass** das selbstschneidende Element (1) mit in Längsrichtung verlaufenden Aushöhlungen versehen ist, welche in dem wurzelseitigen Bereich ausgebildet sind.

6. Ein Zahnimplantat nach einem der vorangehenden Ansprüche, **dadurch gekennzeichnet, dass** die Oberflächen des selbstschneidenden Elements (1) rau sind, und der Wert des mittleren Abstands zwischen den Unregelmäßigkeiten (RSm) zwischen 60 und 95 µm liegt.

## Revendications

1. Implant dentaire se composant d'un élément auto-taraudeur (1) comprenant un profil fileté (2) prévu avec un flanc radical (2a) et un flanc cortical (2b), une pluralité d'évidements se présentant sous forme de parties concaves (4a, 4b) étant formés dans chacun des flancs, dans lequel les parties concaves (4a) formées dans le flanc radical (2a) d'une bobine du profil fileté (2) sont positionnées à une certaine distance d'un axe longitudinal (A) de l'élément auto-taraudeur (1) qui est supérieure à la distance des parties concaves (4b) formées dans le flanc cortical (2b) de la même bobine, **caractérisé en ce que** le profil fileté (2) a une inclinaison vers une partie radicale (1a) de l'élément auto-taraudeur (1).

2. Implant dentaire selon la revendication précédente, **caractérisé en ce que** le profil fileté (2) comprend en outre une pluralité de parties concaves (6) formées au niveau du diamètre central de l'élément auto-taraudeur (1).

3. Implant dentaire selon la revendication précédente, **caractérisé en ce que** les parties concaves (4a, 4b ; 6) sont des capuchons sphériques.

4. Implant dentaire selon l'une quelconque des revendications précédentes, **caractérisé en ce que** le profil fileté (2) de l'élément auto-taraudeur (1) comprend une pluralité d'encoches (7) formées dans la direction longitudinale.

5. Implant dentaire selon l'une quelconque des revendications précédentes, **caractérisé en ce que** l'élément auto-taraudeur (1) est prévu avec des cavités longitudinales (3) formées dans la partie radicale (1a).

6. Implant dentaire selon l'une des revendications précédentes, **caractérisé en ce que** les surfaces de l'élément auto-taraudeur (1) sont rugueuses et la valeur de la distance moyenne entre les irrégularités (RSm) est comprise entre 60 et 95 µm.
